(19) Europäisches Patentamt
European Patent Office
Office européen des brevets

(11) **EP 4 604 079 A1**

(12) **EUROPEAN PATENT APPLICATION**

(43) Date of publication:
**20.08.2025 Bulletin 2025/34**

(21) Application number: **24158161.0**

(22) Date of filing: **16.02.2024**

(51) International Patent Classification (IPC):
**G06V 10/82** (2022.01)    **G06V 20/58** (2022.01)
**G06V 10/778** (2022.01)

(52) Cooperative Patent Classification (CPC):
**G06V 10/82; G06V 10/778; G06V 20/58**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Bayerische Motoren Werke
Aktiengesellschaft
80809 München (DE)**

(72) Inventors:
• **Schmidt, Sebastian
81925 München (DE)**
• **Hemachandran Rani, Shyam Shankar
81369 München (DE)**

(54) **UNCERTAINTY BASED ACTIVE LEARNING FOR OBJECT CLASSIFICATION IN VISUAL PERCEPTION TASKS IN A VEHICLE**

(57)    The present invention relates to enabling active learning for object classification in visual perception tasks in a vehicle. To this end, an object class out of a plurality of object classes is determined for one or more data points within automotive sensor data. Further, an uncertainty value for each of the one or more data points within the automotive sensor data indicative of an uncertainty of the object class determination and one or more object instances within the automotive sensor data are determined. Then, a patch for each data point having a corresponding uncertainty value exceeding an uncertainty threshold and a patch distance measure for each patch is determined. Each patch having a patch distance measure exceeding a patch distance measure threshold is provided to an oracle. Finally, an object annotation of each patch is received from the oracle.

Fig. 2B

EP 4 604 079 A1

**Description**

TECHNICAL FIELD

The invention generally relates to active learning and more precisely to active learning in the context of perception tasks in vehicles configured to provide at least partial driving automation.

BACKGROUND

To enable at least partial driving automation, a vehicle needs to accurately perform automotive perception tasks, such as object classification, object detection or semantic segmentation. These perception tasks are usually performed by machine learning algorithms, which need to be trained on large datasets and may be further improved even once the vehicle is deployed in traffic. One way of ensuring accurate performance of automotive perception tasks by the machine learning algorithms is to train the machine learning algorithms with large, labeled datasets, i.e. datasets which indicate the outcome of the respective automotive perception task. However, since such labeling may be performed manually, large, labeled datasets to train machine learning algorithms for at least partial driving automation may be costly to generate. To overcome this issue, active learning may be used, i.e. a given machine learning algorithm may be inferenced on unlabeled data and may request that a subset of the unlabeled data be labeled based on active learning criteria. However, the active learning criteria need to generally be determined in a way which improves a given machine learning algorithm and in the context of at least partial driving automation need to enable achieving the level of accuracy of a machine learning algorithm required for of at least partial driving automation.

It is therefore an objective of the present disclosure to provide active learning criteria which enable the training and improvement of a machine learning algorithm configured to perform an automotive perception task in a manner ensuring the accuracy required for at least partial driving automation.

SUMMARY OF THE INVENTION

To achieve this objective, the present disclosure provides a method configured to enable active learning for object classification in visual perception tasks in a vehicle configured to provide at least partial driving automation based on the object classification. The method comprises determining, for one or more data points within automotive sensor data, an object class out of a plurality of object classes. Each object class corresponds to an object type encounterable in a driving environment of the vehicle. The method further comprises determining, for each of the one or more data points within the automotive sensor data, an uncertainty value indicative of an uncertainty of the object class determination. The method further comprises determining, within the automotive sensor data, one or more object instances. Each object instance corresponds to an object in a driving environment of the vehicle and includes one or more data points of the automotive sensor data. The method further comprises determining a patch for each data point having a corresponding uncertainty value exceeding an uncertainty threshold. Each patch includes one object instance of the one or more instances, which includes the given data point, and one or more neighboring data points of the one instance. The method further comprises determining, for each patch, a patch distance measure. Each patch distance measure is indicative of a distance between a vector representation of each patch and a vector representation of another patch determined based on the automotive sensor data. The method further comprises providing each patch having a patch distance measure exceeding a patch distance measure threshold to an oracle. Finally, the method comprises receiving, from the oracle, an object annotation of each patch.

The present disclosure further provides an automotive control unit. The automotive control unit comprises at least one processing unit and a memory coupled to the at least one processing unit and configured to store machine-readable instructions. The machine-readable instructions cause the at least one processing unit to determine, for one or more data points within automotive sensor data, an object class out of a plurality of object classes. Each object class corresponds to an object type encounterable in a driving environment of the vehicle. The machine-readable instructions further cause the at least one processing unit to determine, for each of the one or more data points within the automotive sensor data, an uncertainty value indicative of an uncertainty of the object class determination. The machine-readable instructions further cause the at least one processing unit to determine, within the automotive sensor data, one or more object instances. Each object instance corresponds to an object in a driving environment of the vehicle and includes one or more data points of the automotive sensor data. The machine-readable instructions further cause the at least one processing unit to determine a patch for each data point having a corresponding uncertainty value exceeding an uncertainty threshold. Each patch includes one object instance of the one or more instances, which includes the given data point, and one or more neighboring data points of the one instance. The machine-readable instructions further cause the at least one processing unit to determine, for each patch, a patch distance measure. Each patch distance measure is indicative of a distance between a vector representation of each patch and a vector representation of another patch determined based on the automotive sensor data. The machine-readable instructions further cause the at least one processing unit to provide each patch having a patch distance measure exceeding a patch distance measure threshold to an oracle. Finally, the machine-readable instructions further cause the at least one processing unit to receive, from the oracle, an object annotation of each patch.

The present disclosure further provides a vehicle comprising the automotive control unit.

BRIEF DESCRIPTION OF THE DRAWINGS

Examples of the present disclosure will be described with reference to the following appended drawings, in which like reference signs refer to like elements.

Fig. 1 shows a flowchart of a method configured to enable active learning for object classification in visual perception tasks in a vehicle configured to provide at least partial driving automation based on the object classification according to examples of the present disclosure.

Figs. 2A and 2B illustrate the processing of automotive sensor data in accordance with the method of Fig. 1 according to examples of the present disclosure.

Fig. 3 illustrates a vehicle according to examples of the present disclosure.

Fig. 4 illustrates an automotive control unit according to examples of the present disclosure.

It should be understood that the above-identified drawings are in no way meant to limit the present disclosure. Rather, these drawings are provided to assist in understanding the present disclosure. The person skilled in the art will readily understand that aspects of the present invention shown in one drawing may be combined with aspects in another drawing or may be omitted without departing from the scope of the present disclosure.

DETAILED DESCRIPTION

The present disclosure generally provides a method configured to enable active learning for object classification in visual perception tasks in a vehicle configured to provide at least partial driving automation based on the object classification. In addition, the present disclosure generally provides an automotive control unit configured to execute instructions implementing said method and a vehicle including said automotive control unit.

Typically, a vehicle is equipped with various automotive sensors providing automotive sensor data indicative of a driving environment of the vehicle. In order to infer objects from the automotive sensors, the vehicle is configured to identify objects within the automotive sensor data. The identified objects are then used by advanced driver assistance systems (ADAS) to control longitudinal and lateral motion of the vehicle. In order to safely identify and to thereby safely enable longitudinal and lateral control of the vehicle, the vehicle employs object detection and classification within the automotive sensor data which has been trained on labeled data. However, given the effectively innumerable number of visual appearances of objects in the driving environment of the vehicle, labeled training data cannot cover all potential visual appearances of a given object, such as a pedestrian or other vulnerable road user (VRU).

To account for the fact that training data may never cover all possible visual appearances of objects encounterable in the driving environment of the vehicle, the present disclosure proposes an active learning approach for object classification in vehicles, which decides based on two criteria whether to request an oracle to annotate a subset of automotive sensor data. Based on this annotation, the accuracy of the object detection and classification performed by the vehicle and thus the safety of the longitudinal and lateral control of the vehicle by one or more ADASs may be improved.

The first of the two criteria is an uncertainty of the object classification performed by the vehicle regarding the classification of objects within the automotive sensor data. More precisely, the vehicle is configured to determine an uncertainty of an object classification of one or more data points within the automotive sensor data, e.g. based on a Dirichlet distribution. If the uncertainty of an object classification exceeds an uncertainty threshold, a subset of the automotive sensor data, hereinafter referred to as a patch, is determined, which includes an object instance determined by the vehicle, to which the one or more uncertain data points belong, as well as neighboring data points. By determining the patch in this manner, it can be ensured that the oracle is provided with a subset of the automotive sensor data which actually includes an entire object instance, such as a traffic light, instead of an undiscernible subset thereof, such as just a strip of a part of one light of the traffic light, which may simply show part of a red, green or yellow light.

The second of the two criteria is a patch distance measure. Since automotive sensor data typically include multiple object instances, the first criterion discussed above may lead to the generation of multiple patches. In order to limit the number of patches provided to the oracle, the vehicle is configured to determine for each patch a patch distance measure, i.e. a measure of the distance between a given patch and the other patches determined based on the first criterion, which is derived based on vector representations of the patches. In other words, the patch distance measure indicates how much of an outlier a given patch may be with regard to other patches. Only those patches having distance measures exceeding a patch distance measure threshold are then provided to the oracle. Limiting the provision of patches to the oracle to patches with a high patch distance measure may be important both in the case of a driver of the vehicle being the oracle as well as the oracle being a backend classification service, such as an extensive library on a server. In both cases, too many patches may result in excessive data traffic and may lead to delayed provision of the annotated patches, thereby preventing timely consideration of the annotated patches during at least partial driving control of the vehicle.

Based on the two criteria discussed above, the one or more patches are provided to the oracle for annotation, i.e. for identification, by the oracle, of the object classes of the one or more data points of the automotive sensor data included in the one or more patches. The accordingly annotated patches are received by the vehicle and used by the vehicle to improve the object detection and classification and to thereby improve the safety of the longitudinal and lateral control by the one or more ADAS of the vehicle.

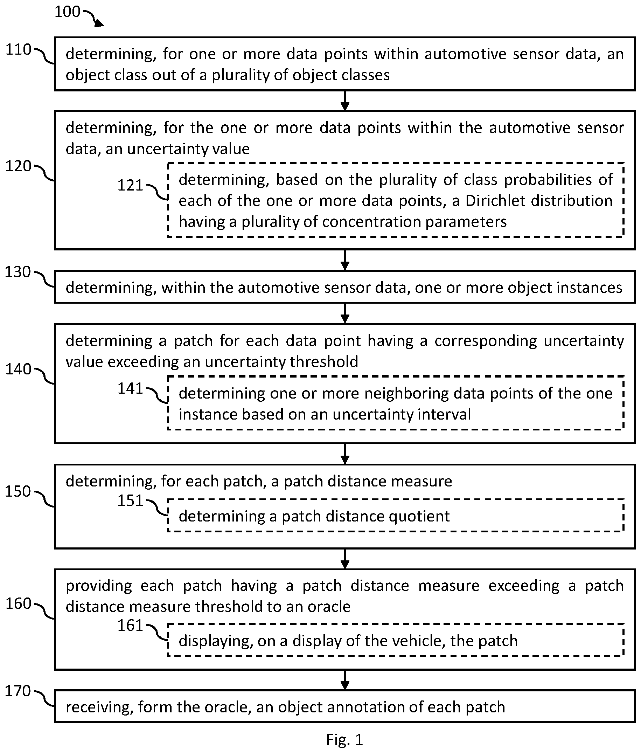

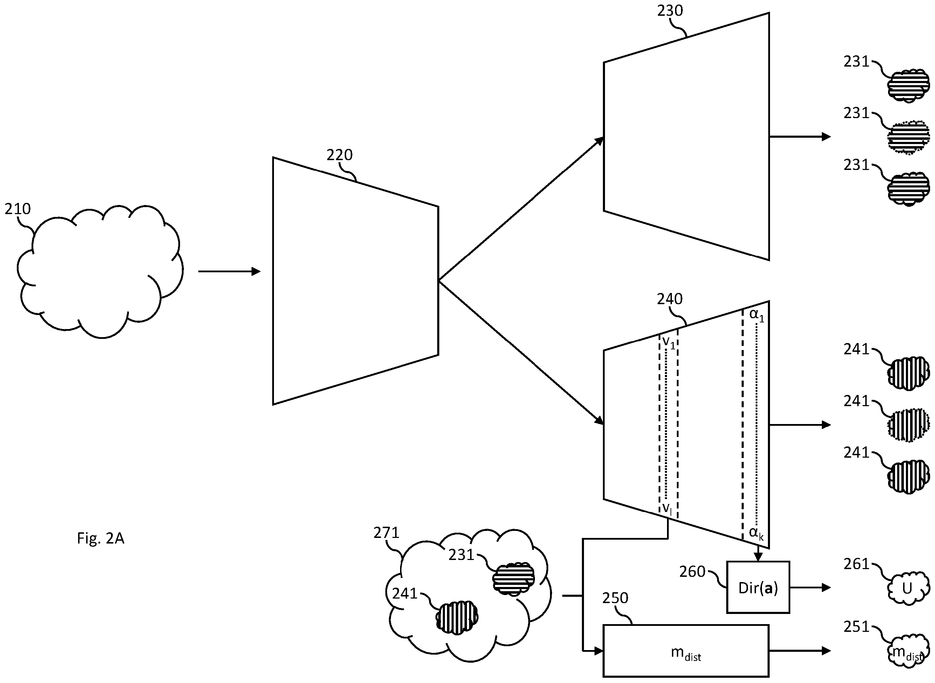

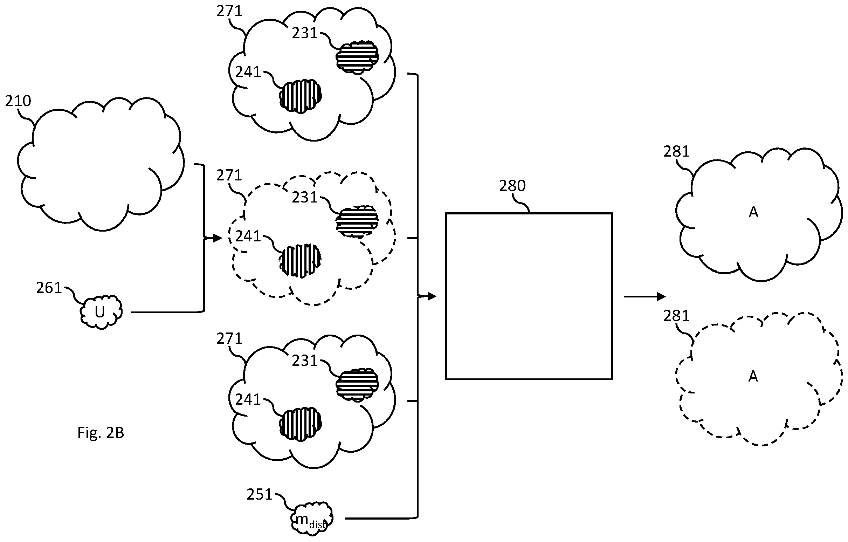

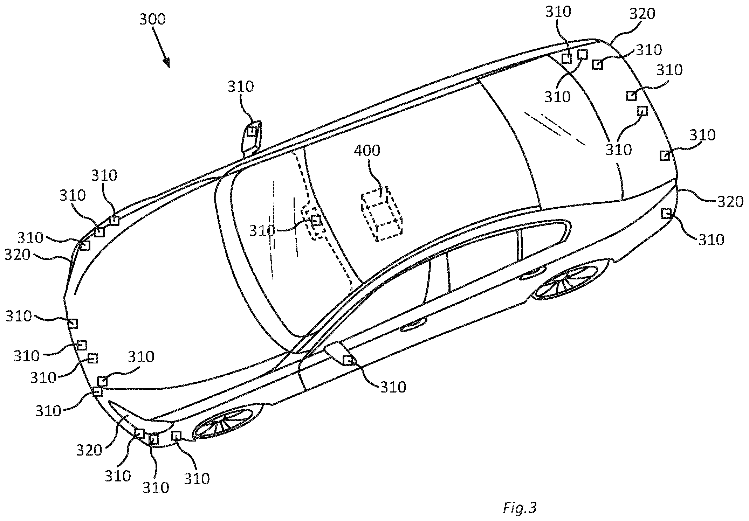

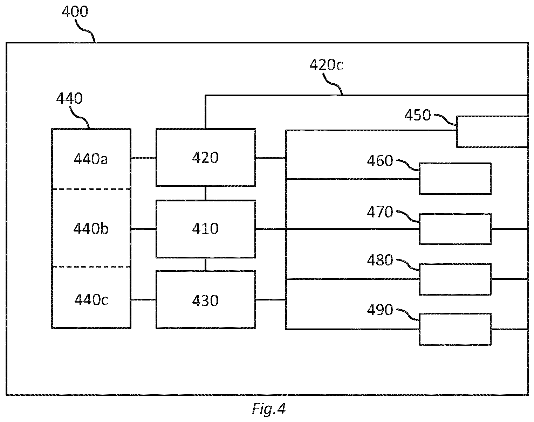

This general concept will be explained with reference to the appended drawings, with Fig. 1 providing a flowchart of a method 100 configured to enable active learning for object classification in visual perception tasks in a vehicle configured to provide at least partial driving automation and Fig. 2 illustrating the processing of automotive sensor data in accordance with the method of Fig. 1. In addition, Fig. 3 illustrates a vehicle according to the present disclosure and Fig. 4 illustrates an automotive controller configured to perform method 100.

It will be understood that dashed boxes in Fig. 1 illustrate optional steps of method 100.

Method 100 is configured to enable active learning for object classification in visual perception tasks in a vehicle, such as vehicle 300 of Fig. 3, configured to provide at least partial driving automation.

Vehicle 200 in the context of the present disclosure refers to any kind of motor vehicle configured to transport people and/or cargo. The motor of vehicle 300 may be any kind of motor, such as an electric motor or an internal combustion engine. Vehicle 300 may e.g. be a passenger vehicle. It will however be understood that the vehicle 300 may also be a bus, a truck or any other kind of vehicle including one or more sensors 310 and an automotive control unit 400 enabling vehicle 200 to provide at least partial driving automation. That is, automotive control unit 400 and one or more sensors 310 are configured to enable at least partial driving automation, i.e. level 2 as defined in standard J3016 of SAE International. Accordingly, method 100 enables improving the accurate performance of object classification in visual perception tasks within automotive control unit 400 in order to increase safe control of the longitudinal motion and the lateral motion of vehicle 300. It will be understood that method 100, automotive control unit 400 and one or more sensors 310 may enable higher levels of automation, e.g. up to and including level 5 as defined in standard J3016 of SAE International.

The one or more sensors 310 may be configured to capture automotive sensor data indicative of a driving environment of vehicle 300, which may provide the environmental awareness enabling at least partial driving automation. For example, the one or more sensors 310 may provide vehicle 300 with information on the position and size of other vehicles or with information regarding road surface markings, which are extracted from the automotive sensor data based on the object classification performed by the machine learning algorithm. To this end, the one or more sensors 310 may be radar sensors, which may be configured to emit radio waves in order to determine a distance, an angle and a velocity of objects around the vehicle based on the reflected radio waves. The one or more sensors 310 may be light detection and ranging (LIDAR) sensors, which are configured to emit laser beams in order to determine a distance, an angle and a velocity of objects around vehicle 300 based on the reflected laser beams. The one or more sensors 310 may be cameras, which capture images of the environment of the vehicle. The one or more sensors 310 may be thermographic cameras, which capture images of the environment of vehicle 300 based on infrared radiation. It will be understood that LIDAR sensors, radar sensors or cameras are merely provided as examples of sensor types of the one or more sensors 310. For example, the one or more sensors 310 may also be ultrasonic sensors. More generally, the one or more sensors 310 may be any type of sensor capable of capturing sensor data indicative of the environment of vehicle 300. It will further be understood that the one or more sensors 310 may include multiple sensors of various types of sensors. Further, the one or more sensors 310 of the same type may exhibit different properties, e.g. by being configured to capture sensor data at different ranges, such as a close range, a middle range and a far range. For example, vehicle 300 may include three close range radar sensors each at a front and a back of vehicle 300, a middle range to far range radar sensor at the back of vehicle 300, a LIDAR sensor at the front of vehicle 300, a rear-facing camera at the back of vehicle 300, a front-facing camera at the front of the vehicle, a front-facing camera at the rear-view mirror and a rear-facing close range to middle range radar sensor in each door-mounted outer rear view mirror. It will be understood that vehicle 300 may include more or fewer automotive sensors than shown in Fig. 3 and discussed in the above example.

It will be understood that automotive sensor data in the sense of the present application may be any kind of data, such as an image frame, a data cloud or any other type of data structure suitable to include data from automotive sensors 310 and to thereby convey information indicative of the driving environment of vehicle 300. To illustrate this fact, automotive sensor data is illustrated as automotive sensor data 210 in the form of a cloud in Figs. 2A and 2B. Single data elements within automotive sensor data 210 will be referred to throughout this disclosure as data points and may e.g. be pixels in the example of automotive sensor data 210 being a frame.

Automotive control unit 400 will be discussed in more detail below with regard to Fig. 4.

In the context of the present disclosure, visual perception task refers to any kind of task identifying one or more object classes within automotive sensor data 210 captured by the one or more sensors 310. The visual perception task may for example identify within automotive sensor data provided by a camera included in vehicle 300 whether vehicle 300 is located on a controlled-access highway, a limited-access road, an arterial road, a local road or a parking lot. In this case, the one or more object classes correspond to the type of road on which vehicle 300 may be located. Further, the visual perception task may for example identify within automotive sensor data provided by a LIDAR sensor and multiple cameras included in vehicle 200 other vehicles and the type of vehicle, road surface markings and the type of road surface marking, road signs and the type of road sign, vulnerable road users (VRUs) as well as traffic lights and the indication state of the traffic light. Accordingly, the object classes of the plurality of object classes may correspond to any possible road user, road traffic control device and road surface marking as well as any other type of element encounterable in the driving environment of the vehicle 200 relevant for enabling at least partial driving automation. More generally, the visual perception task may thus be any perception task determining the class of objects in the vicinity of vehicle 200, with the objects referring to both a determination of the general environment of vehicle 200 as well as a determination of individual elements in the vicinity of vehicle 200. In this context, it will accordingly be understood that object classification in the context of the present disclosure may identify the classes of multiple objects within automotive sensor data 210 and is not limited to the identification of a single object class within automotive sensor data 210.

In the context of the visual perception task, active learning is thus to be understood in the context of the present disclosure to refer to an object classifier, which performs at least a part of the visual perception task requesting an oracle to label the automotive sensor data, i.e. to determine an object class within the automotive sensor data.

The object classifier may be any kind of machine learning algorithm which has been trained based on training automotive sensor data to classify objects in the driving environment of the vehicle, i.e. which has been trained to perform a visual perception task as defined above. Training automotive sensor data may be unlabeled, partially labeled or fully labeled. In other words, the training automotive sensor data may include the corresponding object classes in addition to the automotive sensor data. However, given the active learning functionality discussed above and described in detail below, the training automotive sensor data need not be fully labeled. The machine learning algorithm may be a feature extractor configured to extract objects from the automotive sensor data and to determine the object class of the extracted objects. To this end, the machine learning algorithm may e.g. be an artificial neural network (ANN), an autoencoder or a data clustering algorithm. For example, if the object classifier is implemented as a neural network configured to perform at least the determination of object classes, a plurality of activation levels of an output layer of the neural network may correspond to a plurality of class probabilities.

It will be understood that a class probability in the context of the present disclosure indicates for a given data point of the automotive sensor data the probability of the given data point being indicative of a corresponding object class. Taking an object classifier configured to identify 100 different object classes as an example, the plurality of class probabilities in this examples includes 100 class probabilities with each class probability indicating, for a given data point, the probability of the given data point being indicative of each of the 100 classes. It will be understood that the object classifier may be able to identify any number of classes, such as 10,000 or 10, depending on the type of object classification the object classifier is designed to perform within the context of the visual perception task and the at least partial driving control of vehicle 300. Based on the highest probability out of the plurality of class probabilities, the object classifier may determine the given data point as being indicative of the object class corresponding to the highest class probability.

As illustrated in Fig. 2A, the object classifier may be implemented together with an object instance determinator using a dual-headed neural network, which may also be considered an autoencoder with two outputs. The dual-headed neural network may include a shared encoder 220, an instance decoder 230 and an object class decoder 240.

Shared encoder 220 may be configured to generate a shared latent space. The shared latent space may include all activation values of all neurons of the output layer of shared encoder 220, which corresponds to the bottleneck of the dual-headed neural network.

Instance decoder 230 may be configured to determine one or more object instances 231 within automotive sensor data 210 based on the shared latent space. Object instance in the context of the present disclosure refers to an individual object identified within automotive sensor data 210, such as a VRU, a vehicle or a traffic light. However, each object instance 231 is merely indicative of the presence and the location of an object within automotive sensor data 210 and not of the object class. Thus, each object instance indicates a position within and the data points of automotive sensor data 210 which from an object.

Object class decoder 240 may be configured to determine for one or more data points within automotive sensor data 210 a corresponding object class 241 based on the shared latent space. Object class decoder 240 and shared encoder 220 may thus be considered the object classifier discussed above. Accordingly, object class decoder 240 may determine the corresponding object class 241 for one or more data points within automotive sensor data 210 based on the highest class probability within the plurality of class probabilities as discussed above.

In step 110, method 100 determines for one or more data points within automotive sensor data 210 an object class 241 out of the plurality of object classes. In other words, method 100 determines for one or more data points within automotive sensor data 210 a corresponding object class 241. The processing performed by step 110 is performed by the object classifier discussed above and is illustrated in Fig. 2A by shared encoder 220 and object class decoder 240 determining three exemplary object classes 241 based on automotive sensor data 210.

In step 120, method 100 determines for each of the one or more data points within automotive sensor data 210 an uncertainty value 261. That is, step 120 corresponds to the determination of the first criterion discussed above. Each uncertainty value 261 is indicative of an uncertainty of the object class determination, i.e. the object classification performed by the object classifier. Accordingly, method 100 determines an uncertainty value 261 for each object class 241 determined in step 110. Each uncertainty value may be based on the plurality of class probabilities discussed above. Since the plurality of class probabilities indicates how likely it is that a given data point within automotive sensor data 210 is indicative of each of the object classes determinable by the object classifier, the class probabilities corresponding to the object classes not identified as being indicated by the given data point may be used as a measure of the uncertainty of the object classification. Based on this fact, various probability analysis approaches may be used. To this end, step 120 may for example include a step 121, in which method 100 may determine a Dirichlet distribution Dir($\alpha$) based on the plurality of class probabilities of each of the one or more data points. Accordingly, each Dirichlet distribution Dir($\alpha$) may have a plurality of concentration parameters, which may correspond to the plurality of class probabilities. Based on the Dirichlet distributions, each uncertainty value 261 of each of the one or more data points within automotive sensor data 210 may be calculated as shown in equation (1):

$$U = \frac{C}{\sum_{k=1}^{C} \alpha_k} \qquad (1)$$

In equation (1), U denotes uncertainty value 261, C denotes the number of classes the object classifier is configured to identify and $\alpha_k$ denotes the concentration parameter, which may correspond to the class probabilities.

It will be understood that uncertainty value 261 may also be determined based on an entropy of the plurality of class probabilities or may be determined based on other uncertainty calculations related based on Dirichlet distributions, such as entropic uncertainty of the Dirichlet distribution, a logarithmic uncertainty of the Dirichlet distribution or any other uncertainty determination based on other types of calculation based directly or indirectly on the plurality of class probabilities.

In Fig. 2A, the exemplary determination of the uncertainty values 261 is illustrated by Dirichlet distribution determination 260, which receives the activation values of the last layer of object class decoder 240, i.e. the plurality of class probabilities of each of the one or more data points within automotive sensor data 210.

In step 130, method 100 determines within automotive sensor data 210 one or more object instances 231. As discussed above, each object instance corresponds to an object in the driving environment of vehicle 300 and includes one or more data points of automotive sensor data 210. In other words, method 100 determines in step 130 objects in terms of their position and size but not in terms of the type of object. Step 130 is illustrated in Fig. 2A by shared encoder 220 and instance decoder 230, which together receive automotive sensor data 210 or a subset thereof as input and generate one or more object instances 231 based on automotive sensor data 210.

In step 140, method 100 determines a patch 271 for each data point having a corresponding uncertainty value 261 exceeding an uncertainty threshold. Each patch 271 includes one object instance 231 of the one or more object instances 231 determined in step 130, which includes the given data point, i.e. the data point whose corresponding uncertainty value 261 exceeds the uncertainty threshold. The patch further includes one or more neighboring data points of the object instance 231. In addition, by including the given data point, the patch 271 may also be considered to implicitly include the object class 241 of the given data point. To put it differently, method 100 determines in step 140 one or more patches 271 by identifying all object instances 231 including data points within automotive sensor data 210 having uncertainty values 261 exceeding the uncertainty threshold and generates the one or more patches as a combination of the identified object instances 231 and one or more neighboring data points. Each patch 271 may thus be considered an enlarged object instance 231. This approach data ensures that each patch actually includes an entire object instance instead of an subset thereof, which may be undiscernible even for the oracle.

In order to ensure that each patch 271 includes sufficient data points to indeed include an entire object instance step 140 may include step 141, in which method 100 determines the one or more neighboring data points of a given object instance 231 based on an uncertainty interval, which may indicate a positive offset of the uncertainty threshold. In other words, method 100 may in step 141 identify neighboring data points of the object instance 231 including a data point having an uncertainty value 261 which exceeds the uncertainty threshold by including data points which have uncertainty values 261 above the uncertainty threshold but still within a margin of the uncertainty threshold. To prevent this approach from leading to unnecessarily large patches 271, this approach may also be combined with a maximum distance up to which neighboring data points may be included, such as based on a radius, a bounding box or maximum distance in a vector space defined by the data points within automotive sensor data 210.

The uncertainty threshold may correspond to a sum of an average uncertainty and at least one standard deviation of the average uncertainty. That is, method 100 may generate patches 271 for all data points having an uncertainty value which deviates by at least one standard deviation from an average uncertainty of the object determination performed by object class decoder 240.

Fig. 2 illustrates the concept of step 140 in Fig. 2B. Automotive sensor data 210 and the uncertainty values 261 are used to determine one or more patches 271, which respectively include an object instance 231 in addition to neighboring data points, as indicated by each patch 271 including an object instance 231 and being illustrated as being bigger than the object instances 231. Further, since object classes 241 have been determined in step 110 for the one or more data points within automotive sensor data 210, each patch 271 may at least implicitly include an object class 241.

In step 150, method 100 determines for each patch 271 a patch distance measure 251. Each patch distance measure 251 may be indicative of a distance between a vector representation of each patch 271 and a vector representation of another patch 271 determined based on automotive sensor data 210. In other words, method 100 calculates a distance between all patches determined in step 140. The vector representation of each patch 271 used to determine the patch distance measures may correspond to activation values of a layer of object class decoder 240. That is, the vector representation of each patch 271 may be derived from any one of the layers of object decoder 240. Deriving the vector representation of each patch 271 from a layer of object decoder 240 may enable accurate determination of the patch distance measures 251 with reduced computational effort since such a vector representation has a lower dimensionality than each patch 271.

Step 150 may include a step 151, in which method 100 determines one or more patch distance quotients. The patch distance quotient may be indicative of a distance between the vector representation of the given patch 271 and the vector representation of another patch 271 relative to a distance between the vector representation of the given patch 271 and the vector representation of yet another patch 271. Put differently, method 100 may generate in step 151 a patch distance quotient as the patch distance measure 251 for each of the patches 271 by dividing the distance between one of the patches patch 271 and another one of the patches 271 determined in step 140 by the distance between the one of the patches 271 and yet another one of the patches determined in step 140. By determining the patch distance measure 251 based on a quotient of the distances of one patch 271 to two other patches 271, patch distance measure 251 may be determined in a manner ensuring accurate determination of patches 271 which are significantly different from other patches 271.

The concept of step 150 is illustrated in Fig. 2A, which shows patch distance measurement determination 250, which receives activation values $v_1$-$v_l$ from a layer of object class decoder 240 as the vector representation of patches 271 as input in order to determine one or more patch distance measures 251.

In some examples of the present disclosure, the vector representation of each patch 271 may be based on refined activation values $v_1$-$v_l$. That is, instead of using activation values $v_1$-$v_l$ directly as the vector representation of the patches 271, activation values $v_1$-$v_l$ may be refined by a large crowd-sourced database providing data-to-text conversion based on a large database of annotated data and the data points included in patches 271.

In step 160, method 100 provides each patch 271 having a corresponding patch distance measure 251 exceeding a patch distance measure threshold to oracle 280. That is, step 160 implements the second criterion discussed above. Accordingly, only those patches 271 are provided to oracle 280, which are considered outliers in terms of their distance from other patches 271. This limits the number of patches provided to oracle 280 and thereby ensures that only relevant patches 271 are provided to the oracle, which in turn ensures faster turn-around times of the annotation provided by oracle 280.

Oracle 280 may be a cloud-based object classification service, such as a larger object classifier provided on a backend of a manufacturer of vehicle 300 or a large crowd-sourced database providing data-to-text conversion based on a large database of annotated data.

Oracle 280 may be a user of vehicle 300, in which case step 160 may include step 161. In step 161, method 100 may display to the driver on a display of the vehicle each patch 271 selected in accordance with the patch distance measure threshold.

Finally, in step 170, method 100 receives from the oracle 280 an object annotation 281 of each patch 271. That is method 100 in step 170 receives patch 271 with an indication which object class or potentially object classes are included in each patch 271. Method 100 then uses the one or more object annotations 281 in order to improve the object classifier and thereby the safety and accuracy of the at least partial driving control of vehicle 300.

Fig. 4 shows automotive control unit 400 configured to perform method 100. automotive control unit 400 may include a processor 410, a graphics processing unit (GPU) 420, automotive processing system 430, a memory 440, a removable storage 450, a storage 460, a cellular interface 470, a global navigation satellite system (GNSS) interface 480 and a communication interface 490.

Processor 410 may be any kind of single-core or multi-core processing unit employing a reduced instruction set (RISC) or a complex instruction set (CISC). Exemplary RISC processing units include ARM based cores or RISC V based cores. Exemplary CISC processing units include x86 based cores or x86-64 based cores. Processor 410 may perform instructions causing automotive control unit 400 to perform method 100. Processor 410 may be directly coupled to any of the components of computing device 400 or may be directly coupled to memory 430, GPU 420 and a device bus.

GPU 420 may be any kind of processing unit optimized for processing graphics related instructions or more generally for parallel processing of instructions. As such, GPU 420 may be configured to generate a display of information, such as ADAS information or telemetry data, to a driver of the vehicle, e.g. via a head-up display (HUD) or a display arranged within the view of the driver. GPU 420 may be coupled to the HUD and/or the display via connection 420C. GPU 420 may further perform at least a part of method 100 to enable fast parallel processing of instructions relating to method 300. It should be noted that in some embodiments, processor 410 may determine that GPU 320 need not perform instructions relating to method 100. GPU 420 may be directly coupled to any of the components of automotive control unit 400 or may be directly coupled to processor 410 and memory 430. In some embodiments, GPU 420 may also be coupled to the device bus.

Automotive processing system 430 may be any kind of system-on chip configured to provide trillions of operations per second (TOPS) in order to enable automotive control unit 300 to implement one or more ADAS while driving. Automotive processing system 430 may only interface with processor 410 or may interface with other devices via the system bus. Automotive processing system 430 may for example execute instructions relating to shared encoder 220, instance decoder 230 and object class decoder 240.

Memory 440 may be any kind of fast storage enabling processor 410, GPU 420 and automotive processing system 430 to store instructions for fast retrieval during processing of instructions as well as to cache and buffer data. Memory 440 may be a unified memory coupled to processor 410 and GPU 420 and automotive processing system 430 in order to enable allocation of memory 440 to processor 410, GPU 420 and automotive processing system 430 as needed. Alternatively, processor 410, GPU 420 and automotive processing system 430 may be coupled to separate processor memory 440a, GPU memory 440b and automotive processing system memory 440c.

Removable storage 450 may be a storage device which can be removably coupled with automotive control unit 400. Examples include a digital versatile disc (DVD), a compact disc (CD), a Universal Serial Bus (USB) storage device, such as an external SSD, or a magnetic tape. It should be noted that removable storage 350 may store data, such as instructions of method 100 and/or automotive sensor data 210, or may be omitted.

Storage 460 may be a storage device enabling storage of program instructions and other data. For example, storage 460 may be a hard disk drive (HDD), a solid state disk (SSD) or some other type of non-volatile memory. Storage 460 may for example store the instructions of method 100.

Removable Storage 450 and storage 460 may be coupled to processor 410 via the system bus. The system bus may be any kind of bus system enabling processor 410 and optionally GPU 420 as well as automotive processing system 430 to communicate with the other devices of automotive control unit 400. The system bus may for example be a Peripheral Component Interconnect express (PCIe) bus or a Serial AT Attachment (SATA) bus.

Cellular interface 470 may be any kind of interface enabling automotive control unit 400 to communicate via a cellular network, such as a 4G network or a 5G network.

GNSS interface 480 may be any kind of interface enabling automotive control unit 300 to receive position data provided by a satellite network, such as the Global Positioning System (GPS), the Global Navigation Satellite System (GLONASS) or Galileo.

Communications interface 490 may enable computing device 400 to interface with external devices, either directly or via network, via connection 380C. Communications interface 380 may for example enable computing device 300 to couple to a wired or wireless network, such as Ethernet, Wifi, a Controller Area Network (CAN) bus or any bus system appropriate in vehicles. For example, automotive control unit 400 may be coupled to the one or more sensors 310 to receive information about the environment of vehicle 300 in order to classify objects in the vicinity of vehicle 300. Communications interface 490 may also include a USB port or a serial port to enable direct communication with an external device.

Automotive control unit 400 may be integrated with the vehicle, e.g. beneath the cabin, under the dashboard or in the trunk of vehicle 400.

The invention may further be illustrated by the following examples.

In an example, a method is configured to enable active learning for object classification in visual perception tasks in a vehicle configured to provide at least partial driving automation based on the object classification. The example method comprises determining, for one or more data points within automotive sensor data, an object class out of a plurality of object classes. Each object class corresponds to an object type encounterable in a driving environment of the vehicle. The example method further comprises determining, for each of the one or more data points within the automotive sensor data, an uncertainty value indicative of an uncertainty of the object class determination. The example method further comprises determining, within the automotive sensor data, one or more object instances. Each object instance corresponds to an object in a driving environment of the vehicle and includes one or more data points of the automotive sensor data. The example method further comprises determining a patch for each data point having a corresponding uncertainty value exceeding an uncertainty threshold. Each patch includes one object instance of the one or more instances, which includes the given data point, and one or more neighboring data points of the one instance. The example method further comprises determining, for each patch, a patch distance measure. Each patch distance measure is indicative of a distance between a vector representation of each patch and a vector representation of another patch determined based on the automotive sensor data. The example method further comprises providing each patch having a patch distance measure exceeding a patch distance measure threshold to an oracle. Finally, the example method comprises receiving, form the oracle, an object annotation of each patch.

In the example method, the uncertainty threshold may correspond to a sum of an average uncertainty and at least one standard deviation of the average uncertainty.

In the example method, the determining the uncertainty value for each of the one or more data points of the automotive sensor data may be based on a plurality of class probabilities, wherein each class probability may indicate for a given data point the probability of the given data point being indicative of a corresponding object class.

In the example method, the determining the uncertainty value for each of the one or more data points of the automotive sensor data may include determining, based on the plurality of class probabilities of each of the one or more data points, a Dirichlet distribution having a plurality of concentration parameters, wherein the plurality of class probabilities may correspond to the plurality of concentration parameters.

In the example method, the plurality of class probabilities may correspond to a plurality of activation levels of an output layer of a neural network, the neural network being configured to perform at least the object class determination.

In the example method, the determining, within the automotive sensor data, the one or more object instances and the determining, for the one or more data points within the automotive sensor data, a given object class, may be performed using a dual-headed neural network, which may include a shared encoder configured to generate a shared latent space, an instance decoder configured to determine the one or more instances within the automotive sensor data and an object class decoder configured to determine for the one or more data points within the automotive sensor data, a corresponding object class, wherein the vector representation of each patch may correspond to activation values of a layer of the object class decoder.

In the example method, the determining the patch for each data point having a corresponding uncertainty value exceeding the uncertainty threshold may include determining one or more neighboring data points of the one instance based on an uncertainty interval, the uncertainty interval indicating a positive offset of the uncertainty threshold.

In the example method, the oracle may be a cloud-based object classification service.

In the example method, the oracle may be a user of the vehicle, and providing each patch to the oracle may include displaying, on a display of the vehicle, the patch.

In the example method, the determining the patch distance measure for each patch may comprise determining a patch distance quotient, a patch distance quotient, each patch distance quotient being indicative of a distance between the vector representation of the given patch and the vector representation of another patch relative to a distance between the vector representation of the given patch and the vector representation of yet another patch.

In an example, an automotive control unit, comprises at least one processing unit and a memory coupled to the at least one processing unit and configured to store exemplary machine-readable instructions. The exemplary machine-readable instructions cause the at least one processing unit to determine, for one or more data points within automotive sensor data, an object class out of a plurality of object classes. Each object class corresponds to an object type encounterable in a driving environment of the vehicle. The exemplary machine-readable instructions further cause the at least one processing unit to determine, for the one or more data points within the automotive sensor data, an uncertainty value indicative of an uncertainty of the object class determination. The exemplary machine-readable instructions further cause the at least one processing unit to determine, within the automotive sensor data, one or more object instances. Each object instance corresponds to an object in a driving environment of the vehicle and includes one or more data points of the automotive sensor data. The exemplary machine-readable instructions further cause the at least one processing unit to determine a patch for each data point having a corresponding uncertainty value exceeding an uncertainty threshold. Each patch includes one object instance of the one or more instances, which includes the given data point, and one or more neighboring data points of the one instance. The exemplary machine-readable instructions further cause the at least one processing unit to determine, for each patch, a patch distance measure. Each patch distance measure is indicative of a distance between a vector representation of each patch and a vector representation of another patch determined based on the automotive sensor data. The exemplary machine-readable instructions further cause the at least one processing unit to provide each patch having a patch distance measure exceeding a patch distance measure threshold to an oracle. Finally, exemplary the machine-readable instructions further cause the at least one processing unit to receive, form the oracle, an object annotation of each patch.

In the example automotive control unit, the machine-readable instructions may further cause the at least one processing unit to perform the method of any one of the above example methods.

In an example, a vehicle comprises the automotive control unit of any one of the above example automotive control units.

The preceding description has been provided to illustrate enabling uncertainty based active learning for object classification in visual perception tasks in a vehicle. It should be understood that the description is in no way meant to limit the scope of the present disclosure to the precise embodiments discussed throughout the description. Rather, the person skilled in the art will be aware that the examples of the present disclosure may be combined, modified or condensed without departing from the scope of the present disclosure as defined by the following claims.

## List of Reference Signs

| | |
|---|---|
| 100-170 | method and method steps |
| 210 | automotive sensor data |
| 220 | shared encoder |
| 230 | instance decoder |
| 231 | object instance |
| 240 | object class decoder / neural network |
| 241 | object class |
| 250 | patch distance measure determination |
| 251 | patch distance measure |
| 260 | Dirichlet distribution determination |
| 261 | uncertainty value |
| 271 | patch |
| 280 | oracle |
| 281 | object annotation |
| 300 | vehicle |
| 310 | automotive sensor |
| 320 | light |
| 400 | automotive control unit |
| 410 | CPU |
| 420 | GPU |
| 420c | connection |
| 430 | automotive processing system |
| 440 | memory |
| 450 | removable storage |
| 460 | storage |
| 470 | cellular interface |
| 480 | GNSS interface |
| 490 | communications interface |
| $v_1$-$v_l$ | activation values of a layer of object class decoder 241 |
| $\alpha_1$-$\alpha_k$ | class probability |

**Claims**

1. Method (100) configured to enable active learning for object classification in visual perception tasks in a vehicle (300) configured to provide at least partial driving automation based on the object classification, comprising:

   determining (110), for one or more data points within automotive sensor data (210), an object class (241) out of a plurality of object classes, each object class (241) corresponding to an object type encounterable in a driving environment of the vehicle (300);
   determining (120), for each of the one or more data points within the automotive sensor data (210), an uncertainty value (261) indicative of an uncertainty of the object class determination;
   determining (130), within the automotive sensor data (210), one or more object instances (231), each object instance (231) corresponding to an object in a driving environment of the vehicle (300) and including one or more data points of the automotive sensor data (210);
   determining (140), for each data point having a corresponding uncertainty value (261) exceeding an uncertainty threshold, a patch (271), each patch (271) including one object instance (231) of the one or more object instances including the given data point and one or more neighboring data points of the one object instance;
   determining (150), for each patch (271), a patch distance measure (251), each patch distance measure (251) being indicative of a distance between a vector representation of each patch (271) and a vector representation of another patch (271) determined based on the automotive sensor data (210);
   providing (160) each patch (271) having a patch distance measure (251) exceeding a patch distance measure threshold to an oracle (280); and
   receiving (170), from the oracle (280), an object annotation (281) of each patch (271).

2. The method (100) of claim 1, wherein the uncertainty threshold corresponds to a sum of an average uncertainty and at least one standard deviation of the average uncertainty.

3. The method (100) of any one of the preceding claims, wherein the determining (120) the uncertainty value (261) for each of the one or more data points within the automotive sensor data (210) is based on a plurality of class probabilities, wherein each class probability ($\alpha_1$-$\alpha_k$) indicates for a given data point the probability of the given data point being indicative of a corresponding object class (241).

**4.** The method (100) of claim 3, wherein the determining (120) the uncertainty value (261) for each of the one or more data points within the automotive sensor data (210) includes determining (121), based on the plurality of class probabilities of each of the one or more data points, a Dirichlet distribution having a plurality of concentration parameters, wherein the plurality of class probabilities corresponds to the plurality of concentration parameters.

**5.** The method (100) of any one of claims 3 and 4, wherein the plurality of class probabilities corresponds to a plurality of activation levels of an output layer of a neural network (241), the neural network (241) being configured to perform at least the object class determination.

**6.** The method (100) of any one of the preceding claims, wherein the determining (130), within the automotive sensor data, the one or more object instances (231) and the determining (110) for the one or more data points within the automotive sensor data, a given object class (241), is performed using a dual-headed neural network, the dual-headed neural network including:

> a shared encoder (220) configured to generate a shared latent space;
> an instance decoder (230) configured to determine the one or more object instances (231) within the automotive sensor data (210); and
> an object class decoder (240) configured to determine for the one or more data points within the automotive sensor data (210), a corresponding object class (241);
> wherein the vector representation of each patch (271) corresponds to activation values $(v_1 \text{-} v_l)$ of a layer of the object class decoder.

**7.** The method (100) of any one of the preceding claims, wherein the determining (140) the patch (271) for each data point having a corresponding uncertainty value (261) exceeding the uncertainty threshold includes determining (141) one or more neighboring data points of the one object instance (231) based on an uncertainty interval, the uncertainty interval indicating a positive offset of the uncertainty threshold.

**8.** The method (100) of any one of the preceding claims, wherein the oracle (280) is a cloud-based object classification service.

**9.** The method (100) of any one of the preceding claims, wherein:

> the oracle (280) is a user of the vehicle (300), and
> providing (160) each patch (271) to the oracle (280) includes displaying (161), on a display of the vehicle, the patch (271).

**10.** The method (100) of any one of the preceding claims, wherein the determining (150) the patch distance measure for each patch comprises:
determining (151) a patch distance quotient, each patch distance quotient being indicative of a distance between the vector representation of the given patch (271) and the vector representation of another patch (271) relative to a distance between the vector representation of the given patch (271) and the vector representation of yet another patch (271).

**11.** An automotive control unit (400), comprising:

> at least one processing unit (410); and
> a memory (440, 450, 460) coupled to the at least one processing unit (410) and configured to store machine-readable instructions, wherein the machine-readable instructions cause the at least one processing unit (410) to:
>
> > determine, for one or more data points within automotive sensor data (210), an object class (241) out of a plurality of object classes, each object class corresponding to an object type encounterable in a driving environment of the vehicle (300);
> > determine, for each of the one or more data points within the automotive sensor data (210), an uncertainty value (261) indicative of an uncertainty of the object class determination;
> > determine, within the automotive sensor data (210), one or more object instances (231), each object instance (231) corresponding to an object in a driving environment of the vehicle (300) and including one or more data points of the automotive sensor data (210);
> > determine, for each data point having a corresponding uncertainty value (261) exceeding an uncertainty threshold, a patch (271), each patch (271) including one object instance (231) of the one or more object instances (231) including the given data point and one or more neighboring data points of the one object instance (231);
> > determine, for each patch (271), a patch distance measure, each patch distance measure being indicative of a distance between a vector representation of each patch (271) and a vector representation of another patch (271) determined based on the automotive sensor data (210);
> > provide each patch (271) having a patch distance measure exceeding a patch distance measure threshold to an oracle (280); and

receive, from the oracle (280), an object annotation (281) of each patch.

12. The automotive control unit (400) of claim 13, wherein the machine-readable instructions further cause the at least one processing unit (410) to perform the method of any one of claims 2 to 10.

13. A vehicle (300) comprising the automotive control unit (400) of any one of claims 11 and 12.

100 ⌐

110 ⌐ determining, for one or more data points within automotive sensor data, an object class out of a plurality of object classes

120 ⌐ determining, for the one or more data points within the automotive sensor data, an uncertainty value

121 ⌐ determining, based on the plurality of class probabilities of each of the one or more data points, a Dirichlet distribution having a plurality of concentration parameters

130 ⌐ determining, within the automotive sensor data, one or more object instances

140 ⌐ determining a patch for each data point having a corresponding uncertainty value exceeding an uncertainty threshold

141 ⌐ determining one or more neighboring data points of the one instance based on an uncertainty interval

150 ⌐ determining, for each patch, a patch distance measure

151 ⌐ determining a patch distance quotient

160 ⌐ providing each patch having a patch distance measure exceeding a patch distance measure threshold to an oracle

161 ⌐ displaying, on a display of the vehicle, the patch

170 ⌐ receiving, form the oracle, an object annotation of each patch

Fig. 1

Fig. 2A

Fig. 2B

Fig.3

*Fig.4*

Europäisches
Patentamt

European
Patent Office

Office européen
des brevets

## EUROPEAN SEARCH REPORT

**Application Number**

EP 24 15 8161

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/272854 A1 (CAESAR HOLGER [SG]) 27 August 2020 (2020-08-27) * paragraphs [0002], [0004], [0069], [0082], [0100], [0128], [0135], [0136]; figures 13,14 * | 1-13 | INV. G06V10/82 G06V20/58 G06V10/778 |
| A | US 2022/051017 A1 (CHOI JIWOONG [US] ET AL) 17 February 2022 (2022-02-17) * paragraph [0056]; figures 1-4 * | 1-13 | |
| A | US 2023/005173 A1 (TAN KOK SEANG [SG] ET AL) 5 January 2023 (2023-01-05) * paragraph [0115] - paragraph [0118]; figure 13 * | 1-13 | |

**TECHNICAL FIELDS
SEARCHED (IPC)**

G06V

The present search report has been drawn up for all claims

| Place of search | Date of completion of the search | Examiner |
|---|---|---|
| The Hague | 16 July 2024 | Lepetit, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 4 604 079 A1

## ANNEX TO THE EUROPEAN SEARCH REPORT
## ON EUROPEAN PATENT APPLICATION NO.

EP 24 15 8161

This annex lists the patent family members relating to the patent documents cited in the above-mentioned European search report.
The members are as contained in the European Patent Office EDP file on
The European Patent Office is in no way liable for these particulars which are merely given for the purpose of information.

16-07-2024

| Patent document cited in search report | | Publication date | Patent family member(s) | | Publication date |
|---|---|---|---|---|---|
| US 2020272854 | A1 | 27-08-2020 | CN | 113196291 A | 30-07-2021 |
| | | | DE | 112020000487 T5 | 18-11-2021 |
| | | | GB | 2589751 A | 09-06-2021 |
| | | | KR | 20210112293 A | 14-09-2021 |
| | | | US | 2020272854 A1 | 27-08-2020 |
| | | | WO | 2020152627 A1 | 30-07-2020 |
| US 2022051017 | A1 | 17-02-2022 | CN | 115039140 A | 09-09-2022 |
| | | | DE | 112021001461 T5 | 29-12-2022 |
| | | | GB | 2602576 A | 06-07-2022 |
| | | | US | 2022051017 A1 | 17-02-2022 |
| | | | WO | 2022035787 A1 | 17-02-2022 |
| US 2023005173 | A1 | 05-01-2023 | CN | 115565149 A | 03-01-2023 |
| | | | DE | 102021133340 A1 | 05-01-2023 |
| | | | GB | 2608467 A | 04-01-2023 |
| | | | KR | 20230004212 A | 06-01-2023 |
| | | | US | 2023005173 A1 | 05-01-2023 |

EPO FORM P0459

For more details about this annex : see Official Journal of the European Patent Office, No. 12/82